# EUROPEAN PATENT SPECIFICATION

(11) **EP 1 278 616 B1**
(45) Date of publication and mention of the grant of the patent: **10.12.2003**
(21) Application number: 01924054.8
(22) Date of filing: 19.04.2001
(51) Int. Cl.: B27B 21/00

(54) **FOLDABLE HANDSAW WITH A TELESCOPIC TEETH PROTECTOR**
HANDSÄGE MIT EINKLAPPBAREM SÄGEBLATT UND TELESKOPISCHEM ZAHNSCHUTZ
SCIE A MAIN DOTEE D'UNE PROTECTION TELESCOPIQUE DE DENTURE

(30) Priority: 26.04.2000 SE 0001492
(43) Date of publication of application: 29.01.2003
(73) Proprietor: Kapman AB, 811 81 Sandviken (SE)
(72) Inventor: LÖFGREN, Per-Olof, S-821 13 Bollnäs (SE)
(74) Representative: Johansson Webjörn, Ingmari
(86) International application number: SE0100858
(87) International publication number: WO01081052

(56) References cited:
- US-A- 5 924 210

## Description

### Technical field of the invention

This invention refers to a hand saw comprising an elongated blade provided with a line of teeth, and a handle connected to a rear end of the blade by means of a joint, which permits rotation of the blade relative to the handle, between an extended working position and a folded position, including a locking mechanism by means of which the blade position relative to the handle can be locked, where the handle comprises firstly a stiff handgrip frame with two side walls connected by a common back and delimiting an elongated forward open first slot, and secondly a tooth protector device with two second side walls connected by a second common back delimiting a second slot, and said tooth protector being slidable between an inactive position and an active position protruding in the longitudinal direction of the handle, where the teeth of the blade can be inserted into both said slots.

### Aim and features of the invention

A hand saw of the general type mentioned in the introduction is described in the patent application SE 9803675-9 of the applicant. On that saw, the tooth protector device is rotatably movable between its active and inactive positions, which has meant certain disadvantages. Among those, the external similarity between the handle frame and tooth protector, especially their widths, has meant that users in some cases have had difficulties to realise that the two parts of the handle should be folded together after the saw blade has been moved to its working position. In such case the protector device is easily damaged by external force. Another disadvantage occurs when the hand saw is to be provided with a protruding means to allow attaching it to a garment-mounted holder as described in the patent publication WO 99/20909 of the applicant, since the tooth protector cannot be provided with any protruding means. Still another disadvantage is that the tooth protector in its active position always extends equally far from the handle in its direction. This means that saws with different blade lengths require manufacture of different versions of handle and tooth protector.

The present invention aims at further developing the saw described in SE 9803675-9 to reduce the disadvantages mentioned above. According to the invention, this is achieved by the features mentioned in the characterizing part of claim 1. Some preferred embodiments of the invention are further defined in the dependent claims.

### Brief description of the drawings included

In the drawings show:
- Figure 1: shows a lateral view of a saw according to the invention, with a blade moved to its working position for sawing, and with a tooth protector in its active position as an extension of the saw handle,
- Figure 2: shows a corresponding lateral view with the tooth protector in an inactive position inside the handle,
- Figure 3: shows a lateral view showing the same saw with the blade in a position folded into the handle and the tooth protector,
- Figure 4: shows a split perspective view showing three different components of the handle,
- Figure 5: shows a cross section through the handle and the tooth protector inserted therein,
- Figure 6: a shows corresponding cross section through the tooth protector alone,
- Figure 7: shows a cross section through the handle in a region of a locking mechanism,
- Figure 8: a shows corresponding cross section showing a pin component of the locking mechanism separated from the handle.

### Detailed description of a preferred embodiment of the invention

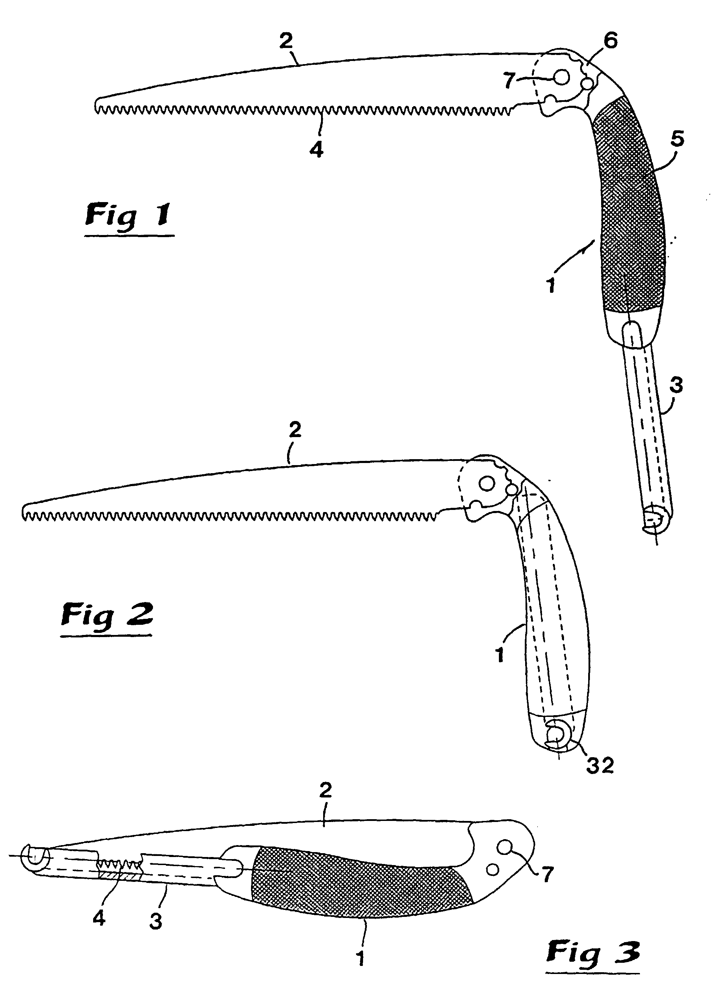

The saw according to the invention shown in figures 1-3 in various positions comprises a handle 1, a blade 2 and a tooth protector 3. The blade 2 carries teeth 4 forming a line of teeth, which preferably, but not necessarily, is basically straight. The handle 1 comprises an elongated handgrip or frame 5 and a joint part 6 forming a blunt angle with the handgrip 5. Actual values of the angle between the handgrip 5 and the joint part 6 can be in the region 125 to 150 degrees.

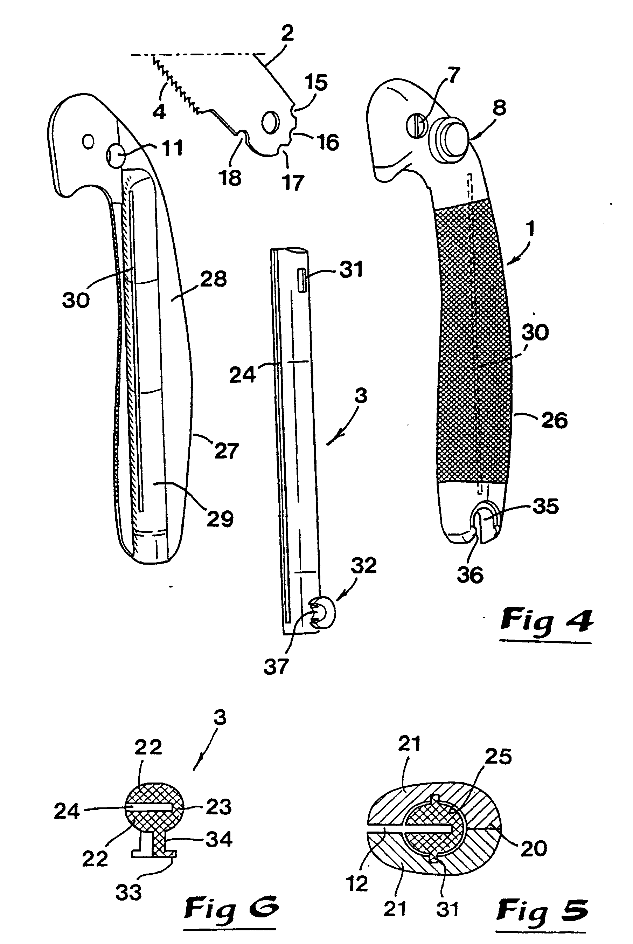

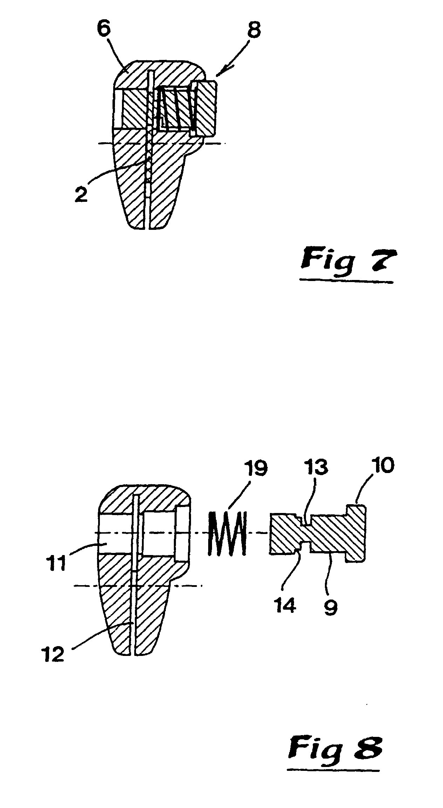

The rear toothless rear end portion of the blade 2 is inserted in an open slot in the joint part 6 and attached to this by a joint 7 which allows rotation of the blade relative to the handle. To lock the blade in a desired position a locking mechanism 8 is provided, shown in detail by figures 7 and 8. These show that the locking mechanism comprises a cylindrical pin 9 with a head 10. The pin 9 is located in a bore 11 extending through the joint part 6, at right angle to the slot 12 into which the rear end of the blade is inserted. The pin 9 is provided with two axially adjacent constrictions 13,14 with different diameters. As shown by figure 4 the rear end portion of the blade 2 is generally semicircular, with four separate arcuate recesses 15,16,17,18. The diameter of these recesses corresponds in principle to the diameter of the larger constriction 14 of the pin 9. The pin is normally held in an outer end position by a spring 19, where the larger constriction 14 is located in the same plane as the slot 12, where the pin locks the blade in a desired position if it engages with one of the recesses 15-18. When the blade is to be released to be rotated, the pin 9 is pressed into the bore 11 against the force of the spring 19 until the narrower constriction 13 is located in the plane of the slot 12. That constriction 13 has a diameter small enough in comparison to the depth of the actual recess, to allow rotation of the blade to some other angular position, unhindered by the pin.

The separate recesses 15-18 are separately located along the periphery at predetermined angles. In figures 1 and 2, the pin 9 is engaging a recess 17 where the handgrip 5 of the handle forms an angle about 100 degrees with the blade 2. In the position shown by figure 3, the pin is engaging another recess 18, and the blade 2 is inserted in the handgrip 5 basically parallel to it. The handgrip 5 can also form a blunt angle of about 134 degrees with the blade 2 by making the pin engage a third recess 16. Finally, the handgrip 5 may be put at an upward rearward angle from the blade by making the pin engage a fourth recess 15.

With reference to figures 4-6, these illustrate an embodiment of the invention. As shown by figure 5, the handgrip part 5 of the handle 1 comprises a stiff frame with two lateral walls 21 connected by a common back 20 and separated by the slot 12, which is a continuation of the slot in the joint part 6. In the following, this slot will be called the first slot. The tooth protector 3 also comprises two lateral walls 22 connected by a back 23 and delimiting a second slot 24. A characteristic feature of this tooth protector is that it is shaped as a slide located in an elongated cavity 25 within the handgrip 5 part of the handle, with an opening slot 12. This slide 3 is longitudinally displaceable between an inactive position shown with interrupted lines in figure 2. and an active protruding position shown in figures 1 and 3. As is clearly shown in figures 5 and 6, the slide 3 has a generally oval cross section, corresponding to an oval cross section of the cavity 25.

Figure 4 shows how the handle 1 is composed from two halves 26,27 made from a polymer material. Both these halves are made with flat insides 28 and convexly curved outsides, where the flat insides 28 are pressed together when the halves 26,27 are to be united by a suitable method such as gluing or welding. Each half 26,27 is provided with an elongated recess 29 open towards the free lower end of the handgrip. Together, the two recesses 29 in the two halves 26,27 form the cavity 25 mentioned above. At the bottom of each recess is provided a groove 30 ending at a certain distance from each end of the handgrip 5. These grooves cooperate with two locking elements formed as protrusions 31 located on the outside of the slide 3 close to its inner end. When the slide is pulled towards its active protecting position, the locking elements 31 ensure that the slide is retained by the handle without being disengagable.

One side of the outer end portion of the slide 3 is provided with a hinge device 32 of the kind described in WO 99/20909. As known, this hinge device comprises a generally horseshoe-shaped outer flange 33 and a narrower neck 34 between the flange and the outside of the slide. The hinge device serves to allow connecting of the saw to a garment-mounted holder clip of the kind described in WO 99/20909, which includes a keyhole-shaped recess into which the hinge device can be introduced in a manner which allows the saw to swing relative to the holder clip, and which allows easy disconnection of the saw from the holder. One of the gripping part halves 26 is provided with a cutout 35 to receive the hinge device 32. This cutout 35 is open at the free end of the handgrip and is provided with a retaining bump 36. When the slide is pushed into its inner inactive position in the cavity 25, the narrow neck 34 of the hinge device 32 enters the recess 35 and is snapped in place by the bump 36 which fits into a pit-like recess 37 in the hinge device. This snap connection thus ensures that the slide is retained in the corresponding cavity when the saw is to be actively used, in a position shown in figure 2. However, the snap connection does not produce a noticeable resistance to pulling the slide out to the actively protecting position according to figures 1 and 3.

### Function and advantages of a saw according to the invention.

When the tooth protecting slide (3) is pushed into its inactive position according to figure 2, it is basically hidden within the handgrip (5), allowing every prospective customer to clearly identify the type of tool as a saw. In the pushed-in position the slide is also well protected against external damage and reliably secured in the handgrip by the snap connection mentioned above.

When the saw after use is to be stored and the tooth protective action of the slide (3) to be activated, the slide is simply pulled out from the handgrip part of the handle by manually pulling the hinge device (32), past the force of the snap connection. The pulling displacement is limited at an outer end position when the protrusions (31) reach the ends of the two co-operating grooves (30). In this position, the blade (2) can be folded by rotation to the position shown in figure 3, where the tooth line of the blade is inserted into the first slot (12) in the handgrip part as well as into the second slot (24) in the slide. In this folded position the blade is locked by means of a locking mechanism 8, and more precisely by making the pin (9) enter a recess (18). Then the blade cannot be unintentionally swung open from the handle, and the handgrip part together with the slide will provide a reliable protection of and from the sharp teeth of the blade as long as the user does not by intentional manipulation of the locking mechanism (8) release the blade for active use.

One basic advantage of the saw according to the invention is that the slide serving as a tooth protector can be totally hidden within the handle, and can be displaced between its active and inactive positions by a simple linear motion. In its position hidden within the handle, the tooth protector is well protected from damage from external forces. Another advantage is that the means needed for connection to a garment-mounted holder, the hinge device 32, can be provided on the sliding tooth protector itself, rather than on the saw handle, thereby permitting the hinge device to be almost enclosed in the cutout (35) in the handgrip part of the handle, without protruding noticeably on the outside of the handle. Still another advantage of the invention is that slides with varying distance of displacement to the active position can be simply manufactured, by locating the locking protrusions (31) at different distance from the free end of the slide. This allows identical handle designs and details to be used for blades of different lengths.

## Claims

1. A handsaw comprising an elongated blade (2) provided with a line of teeth (4), and a handle (1 ) which is connected to a rear end of the blade by a joint (7) which allows rotation of the blade between an extended position and a folded position, and which comprises a locking mechanism (8) by means of which the blade (2) can be locked relative to the handle, where the handle comprises a stiff handgrip frame (5) with two side walls (21) connected by a common back (20) delimiting a first forward opening slot (12) as well as a tooth protector (3) with two second sidewalls (22) connected by a second back (23) delimiting a second slot (24), where the tooth protector is displaceable between an inactive non-protruding position and an active position protruding in the longitudinal direction of the handle, where the teeth of the blade can be inserted in both said slots (12,24), **characterized by** the tooth protector being shaped as a slide (3) located in an elongated cavity (25) in the handgrip frame (5) connected to said first slot (12), and longitudinally slidable between said active and inactive positions.

2. A handsaw according to claim 1, **characterized by** being provided with at least one locking element (31 ) acting between the slide (3) and the handgrip frame (5) to retain the slide in the cavity (25) in the active maximally protruding position of the slide.

3. A handsaw according to claim 2, **characterized by** the locking element being a protrusion (31 ) from the outside of the slide and co-operating with a groove (30) on the inside of a sidewall (21 ) of the handgrip frame.

4. A handsaw according to any of the previous claims, **characterized by** the slide (3) being provided on the outside of an outer end portion with an external hinge device (32) for releasable attachment of the saw to a garment-mounted holder, said device comprising an outer generally horseshoe-shaped flange (33) and a narrower neck (34) between the flange and the slide, and by the outer free end of the handgrip frame (5) being provided with a cutout (35) open towards the rear, into which the neck (34) of the hinge device can be received and snapped in place.

5. A handsaw according to any of the previous claims, **characterized by** the slide (3) having a basically oval cross section corresponding to a basically oval cross section of said cavity (25) in the handgrip frame.

6. A handsaw according to any of the previous claims, **characterized by** the handle being composed by two halves (26,27) provided with elongated recesses (29) which together form said cavity (25) for location of the slide.

## Patentansprüche

1. Handsäge mit einem verlängerten Sägeblatt (2), welche eine Zahnreihe (4) und einen Griff (1) aufweist, der mit einem hinteren Ende des Sägeblatts mit Hilfe eines Gelenks (7) verbunden ist, das die Drehung des Sägeblatts zwischen einer ausgeklappten Position und einer eingeklappten Position ermöglicht, und welche einen Verriegelungsmechanismus (8) besitzt, mit dessen Hilfe das Sägeblatt (2) relativ zu dem Griff festgestellt werden kann, wobei der Griff einen steifen Handgriff-Körper (5) mit zwei Seitenteilen (21), die über ein gemeinsames Rückenteil (20) miteinander verbunden sind und so einen ersten vorderen Öffnungsschlitz (12) begrenzen, sowie einen Zahnschutz (3) mit zwei zweiten Seitenteilen (22) aufweist, die über ein zweites Rückenteil (23) miteinander verbunden sind und so einen zweiten Schlitz (24) begrenzen, wobei der Zahnschutz zwischen einer inaktiven, nicht vorstehenden Position und einer aktiven, in Längsrichtung des Griffes vorstehende Richtung, verschiebbar ist, wobei die Zähne des Sägeblatts in beide Schlitze (12, 24) eingeführt werden können, **gekennzeichnet dadurch, dass** der Zahnschutz als Gleitschiene (3) ausgebildet ist, die in einem länglichen Hohlraum (25) in dem mit dem ersten Schlitz (12) verbundenen Handgriff-Körper (5) angeordnet ist und in Längsrichtung zwischen der aktiven und der inaktiven Position hin- und hergleiten kann.

2. Handsäge nach Anspruch 1, **dadurch gekennzeichnet, dass** sie mindestens ein Verriegelungselement (31) aufweist, das zwischen der Gleitschiene (3) und dem Handgriff-Körper (5) wirkt, um die Gleitschiene in dem Hohlraum (25) in der aktiven, maximal vorstehenden Position der Gleitschiene zu halten.

3. Handsäge nach Anspruch 2, **dadurch gekennzeichnet, dass** das Verriegelungselement ein sich von der Außenseite der Gleitschiene weg erstreckender Vorsprung (31) ist und mit einer Nut (30) auf der Innenseite des Seitenteils (21) des Handgriff-Körpers zusammenwirkt.

4. Handsäge nach einem der vorhergehenden Ansprüche, **dadurch gekennzeichnet, dass** die Gleitschiene (3) auf der Außenseite eines äußeren Endabschnitts mit einer externen Scharniervorrichtung (32) zur lösbaren Anbringung der Säge an einer an der Kleidung befestigten Haltevorrichtung vorgesehen ist, wobei die Vorrichtung einen äußeren, im Allgemeinen hufeisenförmigen Flansch (33) und einen schmäleren Hals (34) zwischen dem Flansch und der Gleitschiene aufweist, und dass das äußere freie Ende des Handgriff-Körpers (5) einen nach hinten offenen Ausschnitt (35) aufweist, in welchem der Hals (34) der Scharniervorrichtung aufgenommen und in Position eingerastet werden kann.

5. Handsäge nach einem der vorhergehenden Ansprüche, **dadurch gekennzeichnet, dass** die Gleitschiene (3) einen grundsätzlich ovalen Querschnitt aufweist, der dem grundsätzlich ovalen Querschnitt des Hohlraums (25) in dem Handgriff-Körper entspricht.

6. Handsäge nach einem der vorhergehenden Ansprüche, **dadurch gekennzeichnet, dass** sich der Griff aus zwei Hälften (26, 27) zusammensetzt, welche längliche Ausnehmungen (29) aufweisen, die zusammen den Hohlraum (25) für die Aufnahme der Gleitschiene bilden.

## Revendications

1. Scie à main comprenant une lame allongée (2) comportant une rangée de dents (4), et un manche (1) qui est relié à une extrémité arrière de la lame par une connexion (7) permettant la rotation de la lame entre une position dépliée et une position repliée, et qui comprend un mécanisme de verrouillage (8) au moyen duquel la lame (2) peut être verrouillée par rapport au manche, le manche comprenant une structure de poignée rigide (5) comportant deux parois latérales (21) reliées par un dos commun (20) délimitant une première fente ouverte vers l'avant (12) ainsi qu'un protecteur de dent (3) ayant deux secondes parois latérales (22) reliées par un second dos (23) délimitant une seconde fente (24), le protecteur de dent étant mobile entre une position inactive non-saillante et une position active faisant saillie dans la direction longitudinale du manche, les dents pouvant être insérées dans les deux fentes (12, 24), **caractérisée par le fait que** le protecteur de dent est en forme de coulisseau (3) situé dans une cavité allongée (25) dans la structure de poignée (5) reliée à la première fente (12), et pouvant glisser longitudinalement entre les positions active et inactive.

2. Scie à main selon la revendication 1, **caractérisée par le fait qu'**elle comporte au moins un élément de verrouillage (31) actif entre le coulisseau (3) et la structure de poignée (5) pour maintenir le coulisseau dans la cavité (25) dans la position active du coulisseau à saillie maximale.

3. Scie selon la revendication 2, **caractérisée par le fait que** l'élément de verrouillage est une saillie (31) de l'extérieur du coulisseau coopérant avec une rainure (30) sur l'intérieur d'un paroi latérale (21) de la structure de poignée.

4. Scie selon l'une quelconque des revendications précédentes, **caractérisée par le fait que** le coulisseau (3) comporte, sur l'extérieur d'une partie d'extrémité externe, un dispositif d'articulation externe (32) pour une fixation amovible de la scie à un support monté sur un vêtement, le dispositif comprenant une bride (33) de forme externe globalement en fer à cheval et un cou plus étroit (34) entre la bride et le coulisseau, et, par l'extrémité externe libre de la structure de poignée (5), comportant une découpe (35) ouverte vers l'arrière, dans laquelle le cou (34) du dispositif d'articulation peut être reçu et maintenu en place.

5. Scie selon l'une quelconque des revendications précédentes, **caractérisée par le fait que** le coulisseau (3) présente une coupe transversale fondamentalement ovale correspondant à une coupe transversale fondamentalement ovale de la cavité (25) dans la structure de poignée.

6. Scie selon l'une quelconque des revendications précédentes, **caractérisée par le fait que** le manche est formé de deux moitiés (26, 27) comportant des cavités allongées (29) formant ensemble la dite cavité (25) de réception du coulisseau.
